(19) Europäisches Patentamt
European Patent Office
Office européen des brevets

(11) Numéro de publication : **0 001 949**
**B1**

(12) **FASCICULE DE BREVET EUROPÉEN**

(45) Date de publication du fascicule du brevet : **29.07.81**

(51) Int. Cl.$^3$ : **C 10 M 1/44**, C 07 F 9/24

(21) Numéro de dépôt : **78400149.7**

(22) Date de dépôt : **26.10.78**

(54) **Nouvelles compositions lubrifiantes contenant du phosphore et de l'azote.**

(30) Priorité : **02.11.77 FR 7732857**

(43) Date de publication de la demande : **16.05.79 (Bulletin 79/10)**

(45) Mention de la délivrance du brevet : **29.07.81 Bulletin 81/30**

(84) Etats contractants désignés : **BE CH DE GB NL SE**

(56) Documents cités :
**FR - A - 1 116 415**
**US - A - 3 117 150**
**Z. CHEMIE, 9. Jahrgang, Heft 10, 1969 VEB Deutsche Verlag F. Grundstoff Industrie, Leipzig, « Phosphor-isothiocyanate » pages 369-377.**

(73) Titulaire : **DROGIL**
**25, quai Paul Doumer**
**F-92408 Courbevoie (FR)**

(72) Inventeur : **Rivier, Georges**
**22bis, rue des Essarts**
**F-69500 Bron (FR)**
Inventeur : **Forat, Gérard**
**154, rue du Professeur Beau Visage**
**F-69008 Lyon (FR)**

(74) Mandataire : **Fabre, Madeleine-France**
**RHONE POULENC Service Brevets Chimie et Polymères B.P.753**
**F-75360 Paris Cedex 08 (FR)**

**EP 0 001 949 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

Nouvelles compositions lubrifiantes contenant du phosphore et de l'azote

La présente invention vise de nouvelles compositions lubrifiantes contenant du phosphore et de l'azote possédant des propriétés extrême-pression et anti-usure améliorées.

On trouve dans le commerce un certain nombre d'additifs contenant notamment du phosphore et de l'azote permettant d'améliorer les propriétés mécaniques des huiles lubrifiantes ; parmi ceux-ci, on peut noter la famille des phosphoramidates tels que ceux décrits dans le brevet amérivain n° 3 810 838. On peut noter également (brevet américain n° 3 117 150) des dérivés de phosphothiourées préparés par action d'un dithiophosphate halogéné substitué sur une amine primaire puis action du produit obtenu sur du sulfure de carbone ; ces produits permettent en particulier d'améliorer les propriétés extrême-pression et anti-usure des huiles lubrifiantes.

La demanderesse a trouvé de nouvelles compositions lubrifiantes ayant des performances encore supérieures.

Les nouvelles compositions objet de l'invention comprenant au moins une huile lubrifiante et au moins un additif extrême-pression et anti-usure contenant du phosphore et de l'azote sont caractérisées en ce que ledit additif contient au moins un motif de formule :

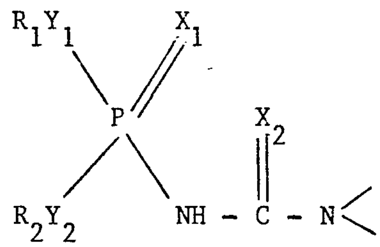

où $Y_1$, $Y_2$, $X_1$ et $X_2$ sont semblables ou différents et représentent un atome d'oxygène ou de soufre ; $R_1$ et $R_2$ sont semblables ou différents et représentent un radical alkyle éventuellement ramifié en $C_3$-$C_{20}$, de préférence en $C_4$-$C_{12}$, un radical alkényle éventuellement ramifié en $C_3$-$C_{24}$, de préférence en $C_3$-$C_{18}$, un radical phényle, un radical phényle substitué par au moins un groupe alkyle en $C_1$-$C_{24}$, de préférence en $C_1$-$C_{12}$, ou par un radical cycloalkyle en $C_3$-$C_{10}$, de préférence en $C_5$-$C_8$ ; et en ce qu'il est obtenu par action d'un composé choisi parmi les isocyanates et isothiocyanates de formule (I) :

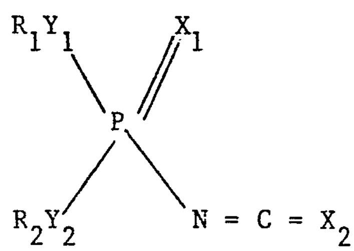

où $Y_1$, $Y_2$, $X_1$, $X_2$, $R_1$ et $R_2$ ont la définition donnée ci-dessus, sur un composé comportant au moins un radical $-\underset{|}{N}-H$.

Les deux valences restantes de l'atome d'azote dudit composé azoté sont de préférence satisfaites par :

— de l'hydrogène

— un radical alkyle en $C_1$-$C_{24}$, de préférence en $C_1$-$C_{18}$, éventuellement substitué par un groupe hydroxy ou triéthoxysilyle ;

— un radical alkylène en $C_2$-$C_{12}$

— le radical aza-7 dioxa-4,10 tridécylène N substitué par un groupe oxa-3' hexylène

— un radical alkényle en $C_3$-$C_{24}$, de préférence en $C_3$-$C_{18}$

— un radical alkynyle en $C_3$-$C_{16}$, de préférence en $C_3$-$C_8$

— un radical cycloalkyle en $C_5$-$C_{12}$, de préférence en $C_5$-$C_9$

— un radical polycycloalkyle en $C_9$-$C_{18}$

— un radical phényle éventuellement substitué par un groupe hydroxy, trifluorométhyle, mercapto-trifluorométhyle ou anilino

— un radical hétérocyclique azoté éventuellement accolé à un cycle benzénique

— un radical hétérocyclique contenant de l'azote et du soufre comme hétéroéléments et accolé à un cycle benzénique

— un radical hétérocyclique contenant de l'azote et du soufre comme hétéroéléments et substitué

par un groupe mercapto

— un radical organique formant avec ledit atome d'azote un hétérocycle contenant éventuellement de l'oxygène comme autre hétéroélément.

Parmi les composés azotés correspondant à ce type préférentiel on peut citer :

— l'ammoniac

— les alkylmonoamines primaires ou secondaires en $C_3$-$C_{12}$ ; telles que la butylamine, l'hexylamine, la décylamine, la diéthyl-2 hexylamine, la dodécylamine, la dipropylamine.

— les hydroxymonoamines en $C_3$-$C_{12}$, telles que l'éthanolamine, la propanolamine, la diéthanolamine, la dipropanolamine.

— les alkylènediamines en $C_2$-$C_{12}$, telles que l'hexaméthylènediamine, l'éthylènediamine.

— les polyamines telles que les polyalkylènes amines, la tris(oxa-3 amino-6 hexyl)amine.

— les alkénylsuccinimides dérivés des amines ci-dessus citées et dont le radical alkényle présente plus de 30 atomes de carbone.

— les alkénylamines dérivées des amines ci-dessus citées et dont le radical alkényle présente plus de 20 atomes de carbone.

— le γ-aminopropyl triéthoxysilane.

— la cyclohexylamine.

— l'aniline.

— l'o-aminophénol.

— le m-trifluorométhylaniline.

— le mercaptotrifluorométhylaniline.

— le N(butyl-2 pentyl) N' (phénylènediamine).

— l'amino-3 triazole-1,2,3.

— l'amino-2 benzothiazole.

— l'amino-2 benzimidazole.

— l'amino-5 mercapto-2 thiadiazole-1,3,4.

— la morpholine.

Parmi les isocyanates ou isothiocyanates répondant à la formule I, on peut citer les produits de formule :

— $(C_6H_{13}O)_2$ 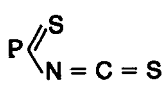 — $(C_6H_{13}O)_2$ 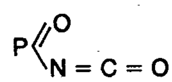

— $(C_4H_9O)_2$ 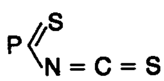

— $(C_6H_{13}O)_2$ 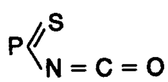

— $(C_6H_{13}O)_2$ 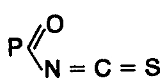

— $(C_6H_{13}S)_2$ 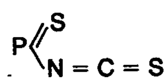

— 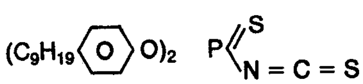

— $(CH_2 = CH—CH_2O)_2$ 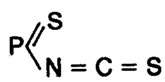

Les dérivés du phosphore et de l'azote entrant dans les compositions objet de l'invention, sont préparés par action d'un isocyanate ou isothiocyanate de formule (I) sur un composé azoté tel que défini ci-dessus, selon un rapport nombre de groupements isocyanate ou isothiocyanate/nombre de groupements NH actifs compris entre 0,5 et 1,25.

La réaction est effectuée à une température comprise entre 20 et 100 °C, de préférence entre 20 et 70 °C, pendant 1/2 heure à 10 heures, de préférence pendant 3/4 heures à 8 heures.

La réaction peut éventuellement être réalisée en présence d'un solvant aliphatique (pentane, hexane...) ou benzénique (benzène, toluène...) éventuellement en mélange avec un solvant aprotique

polaire (hexa méthylphosphorotriamide, N-méthyl-pyrolidone, diméthylformamide, diméthylsulfoxyde...).

Le produit est ensuite lavé, séché et purifié.

Les huiles lubrifiantes entrant dans lesdites compositions peuvent être des huiles naturelles de viscosité comprise entre 20,6 cst et 541 cst à 37,8 °C (soit entre 100 et 2 500 SUS à 100 °F) ou des bases synthétiques ou semi-synthétiques (hydrocarbures synthétiques, esters, polyesters, polyéthers) de viscosités comparables.

Les quantités de dérivés phosphorés et azotés que l'on peut introduire dans les compositions objet de l'invention, sont comprises entre 0,2 et 10 % en poids de ladite composition. Ces quantités d'additifs sont fonction de l'utilisation future des compositions à savoir comme huiles pour moteur, boîte à vitesse ou transmission automatique, fluide hydraulique ou huile de coupe pour l'industrie mécanique.

Les compositions objet de l'invention peuvent également contenir des adjuvants antioxydants, anticorrosion, antimousse, détergents-dispersants, d'autres adjuvants extrême-pression et antiusure... sans qu'il ne résulte de problème lié à la compatibilité ou une perte de niveau des performances.

Cesdites compositions objet de l'invention peuvent être préparées par dissolution de l'additif dans l'huile de base, soit, lorsque d'autres adjuvants doivent être présents, par dissolution de l'additif dans l'huile de base additionnée desdits adjuvants ou par dissolution de l'additif dans lesdits adjuvants et addition de l'huile de base.

Les exemples suivants sont donnés à titre indicatif et ne peuvent être considérés comme une limite du domaine et de l'esprit de l'invention.

## Exemple 1

Préparation de la N(O,O dihéxylphosphorothiono)-N(hydrogéno)-N'(hydrogéno) N'(hexyl) thiourée de formule :

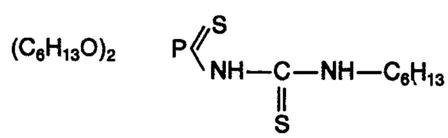

Dans un ballon tricol de 250 ml, on charge 48,5 g (soit 0,15 mole) d'O,O dihexylisothiocyanothiophosphate, puis on coule goutte à goutte pendant 30 mn 17 g (soit 0,165 mole) d'hexylamine. On maintient pendant 45 mn la température de 24-25 °C. On obtient un milieu homogène coloré.

On coule alors 60 ml de pentane ; la solution organique obtenue est lavée par 50 ml d'eau distillée, décantée, puis séchée sur sulfate de sodium.

On obtient, après distillation sous vide du pentane, 58 g d'une huile dont la composition déterminée par analyse élémentaire est la suivante :

| | trouvée (%) | calculée (%) |
|---|---|---|
| phosphore | 7,0 | 7,31 |
| soufre | 12,9 | 15,09 |
| azote | 6,3 | 6,60 |
| carbone | 54,4 | 53,77 |
| hydrogène | 10 | 9,67 |

le taux de transformation par rapport à l'O,O dihexylisothiocyanothiophosphate engagé est de 79 %.

Le rendement par rapport au produit de départ ayant réagi est de 87 %.

L'O,O dihexylisothiocyanothiophosphate mis en œuvre, peut être préparé de la manière suivante :

Dans un ballon tricol de 3 litres, on charge sous agitation 361 g (soit 3,72 moles) de thiocyanate de potassium et 1 l d'acétone sec, puis on coule en 3 h 40 mn, 1 015 g (soit 3,38 moles) d'O,O dihexylchlorothiophosphate en maintenant la température à 25-30 °C ; il se forme un précipité de KCl.

On chauffe, en fin de coulée, sous reflux d'acétone, pendant 2 heures ; on laisse refroidir puis on décante la solution acétonique ; le précipité est lavé avec 500 ml d'acétone sec.

Les solutions acétoniques sont réunies puis distillées sous vide. On récupère ainsi 771 g d'O,O dihexylisothiocyanothiophosphate, ce que confirme l'analyse élémentaire :

| | valeur trouvée (%) | valeur calculée(%) |
|---|---|---|
| phosphore | 8,9 | 9,60 |
| soufre | 18,2 | 19,81 |
| azote | 4,0 | 4,33 |

## Exemple 2

Préparation de la N(O,O dihexylphosphorothiono)-N hydrogéno-N' (dipropyl) thiourée de formule :

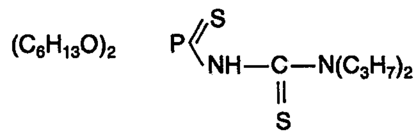

L'opération décrite à l'exemple 1 est réalisée en présence de :
— 32,3 g (soit 0,1 mole) d'O,O dihexylisothiocyanothiophosphate,
— 10 g (soit 0,1 mole) de dipropylamine.
On obtient 40 g d'une huile dont la composition déterminée par analyse élémentaire est la suivante :

| | trouvée (%) | calculée (%) |
|---|---|---|
| phosphore | 7,3 | 7,31 |
| azote | 6,2 | 6,60 |
| soufre | 14,9 | 15,09 |
| carbone | 55,3 | 53,8 |
| hydrogène | 9,9 | 9,67 |

Le taux de transformation est de 89 %.
Le rendement est de 98 %.

## Exemple 3

Préparation de la N(O,O dihexylphosphorothiono)-N hydrogéno-N' (hydrogéno) N'(décyl) thiourée de formule :

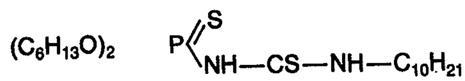

L'opération décrite à l'exemple 1 est réalisée en présence de :
— 32,3 g (soit 0,1 mole) d'O,O dihexylisothiocyanothiophosphate,
— 17,5 g (soit 0,1 mole) de décylamine.
On obtient 47 g de produit dont la composition déterminée par analyse élémentaire est la suivante :

| | trouvée (%) | calculée (%) |
|---|---|---|
| phosphore | 6,1 | 6,46 |
| azote | 5,8 | 5,83 |
| soufre | 11,3 | 13,33 |
| carbone | 59,0 | 57,50 |
| hydrogène | 10,5 | 10,21 |

Le taux de transformation est de 87,7 %.
Le rendement est de 100 %.

## Exemple 4

Préparation de la N(O,O dihexylphosphorothiono)-N hydrogéno-N' (hydrogéno)-N' (dodécyl) thiourée de formule

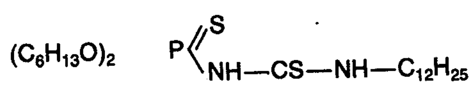

L'opération décrite à l'exemple 1 est réalisée en présence de :
— 32,3 g (soit 0,1 mole) d'O,O dihexylisothiocyanothiophosphate,
— 20,5 g (soit 0,11 mole) de dodécylamine solubilisée dans 70 ml de pentane.
On obtient 50 g d'une huile dont la composition déterminée par analyse élémentaire est la suivante :

| | trouvée (%) | calculée (%) |
|---|---|---|
| phosphore | 5,6 | 6,10 |
| soufre | 10,5 | 12,60 |
| carbone | 59,8 | 59,05 |
| hydrogène | 10,60 | 10,43 |
| azote | 5,20 | 5,51 |

Le taux de transformation est de 90,2 %.
Le rendement est de 100 %.

Exemple 5

Préparation de la N(O,O dihexylphosphorothiono)-N(hydrogéno)-N' (hydrogéno)-N' (cyclohexyl) thiourée de formule :

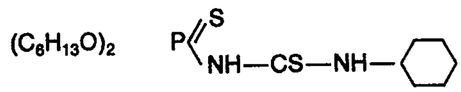

L'opération décrite dans l'exemple 1 est réalisée en présence de :
— 48,5 g (soit 0,15 mole) d'(O,O dihexylisothiocyanothiophosphate),
— 16,5 g (soit 0,165 mole) de cyclohexylamine.

On obtient 62 g d'une huile dont la composition déterminée par analyse élémentaire est la suivante :

| | trouvée (%) | calculée (%) |
|---|---|---|
| phosphore | 7 | 7,35 |
| soufre | 13,2 | 15,7 |
| carbone | 54,0 | 54,03 |
| hydrogène | 9,4 | 9,24 |
| azote | 7,1 | 6,64 |

Le taux de transformation est de 92,3 %.
Le rendement est de 91,3 %.

Exemple 6

Préparation de la N(O,O dihexylphosphorothiono)-N hydrogéno-N' hydrogéno-N' (benzyle) thiourée de formule :

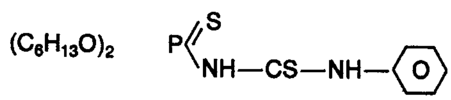

L'opération décrite à l'exemple 1 est réalisée en présence de :
— 32,3 g (soit 0,1 mole) d'O,O dihexylisothiocyanothiophosphate,
— 10,5 g (soit 0,11 mole) d'aniline.

Le produit obtenu est repris par 50 ml de pentane. Après lavage et distillation du solvant, on obtient 41 g d'une huile dont la composition déterminée par analyse élémentaire est la suivante :

| | trouvée (%) | calculée (%) |
|---|---|---|
| phosphore | 6,6 | 7,45 |
| soufre | 13,1 | 15,38 |
| azote | 6,5 | 6,73 |
| carbone | 55,5 | 54,81 |
| hydrogène | 8,0 | 7,93 |

Le taux de transformation est de 71,3 %.
Le rendement est de 45 %.

Exemple 7

Préparation de la N(O,O dihexylphosphorothiono)-N (hydrogéno)-N' (hydrogéno)-N' (o-hydroxyphényl) thiourée de formule :

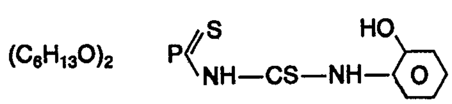

On charge dans un ballon tricol de 250 ml, 32,3 g (soit 0,1 mole) d'O,O dihexylisothiocyanothiophosphate, 12 g (soit 0,11 mole) d'o-aminophénol et 50 ml de toluène. On ajoute 5 ml d'hexaméthylphosphotriamide et on chauffe pendant 2 h 30 mn à 50 °C. Une fois refroidi le milieu est lavé avec 50 ml d'eau ; on décante puis on distille le solvant sous vide.

On obtient 42 g d'une huile dont la composition déterminée par analyse élémentaire est la suivante :

| | trouvée (%) | calculée (%) |
|---|---|---|
| phosphore | 6,8 | 7,18 |
| soufre | 12,2 | 14,81 |
| azote | 6,7 | 6,48 |
| carbone | 53,2 | 52,78 |
| hydrogène | 7,6 | 7,64 |

Le taux de transformation est de 82 %.
Le rendement est de 45,5 %.

Exemple 8

Préparation de la N(O,O dihexylphosphorothiono)-N (hydrogéno)-N' (hydrogéno)-N' (butyl) thiourée de formule :

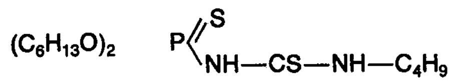

L'opération décrite à l'exemple 1 est réalisée en présence de :
— 32,3 g (soit 0,1 mole) d'O,O dihexylisothiocyanothiophosphate,
— 8 g (soit 0,11 mole) de butylamine,
en maintenant la température à 30 °C pendant 1 heure, et en reprenant le produit par 50 ml de pentane.

On obtient 38 g d'une huile dont la composition déterminée par analyse élémentaire est la suivante :

| | trouvée (%) | calculée (%) |
|---|---|---|
| phosphore | 7,3 | 7,83 |
| carbone | 50,5 | 51,51 |
| hydrogène | 9,2 | 9,34 |
| soufre | 15,0 | 16,16 |
| azote | 6,7 | 7,07 |

Le taux de transformation est de 81 %.
Le rendement est de 100 %.

Exemple 9

Préparation de la N(O,O dihexylphosphorothiono)-N (hydrogéno)-N' (hydrogéno)-N' (éthyl-2 hexyl)thiourée de formule :

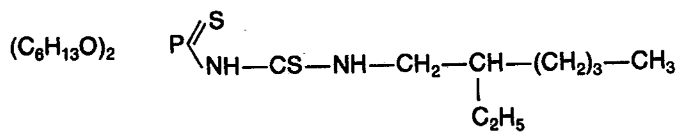

L'opération décrite à l'exemple 8 est réalisée en présence de :
— 32,3 g (soit 0,1 mole) d'O,O dihexylisothiocyanothiophosphate
— 14,2 g (soit 0,11 mole) d'éthyl-2 hexylamine

On obtient 44 g d'un produit visqueux dont la composition déterminée par analyse élémentaire est la suivante :

| | trouvée (%) | calculée (%) |
|---|---|---|
| phosphore | 6,5 | 6,86 |
| carbone | 54,5 | 55,75 |
| hydrogène | 9,8 | 9,95 |
| azote | 5,8 | 6,19 |
| soufre | 13,2 | 14,16 |

Le taux de transformation est de 85 %.
Le rendement est de 100 %.

Exemple 10

Préparation de la N(O,O dihexylphosphorothiono)-N (hydrogéno)-N' (hydrogéno)-N' (1,2,3 triazyl-

5)thiourée de formule :

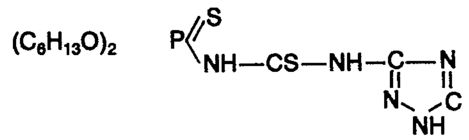

On charge dans un ballon de 250 ml, 48,5 g (soit 0,15 mole) d'O,O dihexylisothiocyanothiophosphate, 14 g d'amino-3 triazol-1,2,3 et 30 ml de pentane. Ce milieu est chauffé à 50° puis on ajoute 30 ml d'hexaméthylphosphotriamide. L'opération dure 7 h 30. Après refroidissement, on lave le milieu à l'aide de 2 fois 60 ml d'eau, on décante puis on élimine le solvant par distillation sous vide.

On obtient 59 g de produit dont la composition déterminée par analyse élémentaire est la suivante :

| | trouvée (%) | calculée (%) |
|---|---|---|
| phosphore | 8,6 | 7,62 |
| carbone | 44,6 | 44,23 |
| hydrogène | 7,9 | 7,37 |
| soufre | 13,6 | 15,72 |
| azote | 13,7 | 17,20 |

Le taux de transformation est de 73 %.

Le rendement est de 100 %.

Exemple 11

Préparation de la N(O,O dihexylphosphorothiono)-N (hydrogéno)-N' (hydrogéno)-N' (benzothiazyl-2)thiourée de formule :

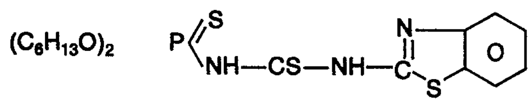

L'opération décrite à l'exemple 13 est réalisée en présence de :
— 39 g (soit 0,12 mole) d'O,O dihexylisothiocyanothiophosphate
— 20 g (soit 0,132 mole) d'amino-2 benzothiazole
— 50 ml d'hexamethylphosphotriamide

pendant 2 h 30 mn à 50 °C.

On obtient 58 g d'un produit dont la composition déterminée par analyse élémentaire est la suivante :

| | trouvée (%) | calculée (%) |
|---|---|---|
| carbone | 50,5 | 50,74 |
| hydrogène | 7,0 | 6,77 |
| soufre | 19,7 | 20,30 |
| phosphore | 7,0 | 6,55 |
| azote | 9 | 8,88 |

Le taux de transformation est de 80,7 %.

Le rendement est de 91,4 %.

Exemple 12

Préparation de la N(O,O dihexylphosphorothiono)-N (hydrogéno)-N' (mercaptothiadiazole-1,3,4)thiourée de formule :

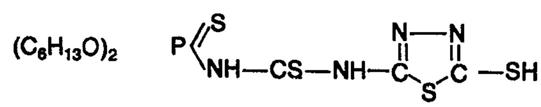

L'opération décrite à l'exemple 10 est réalisée en présence de :
— 32,3 g (soit 0,1 mole) d'O,O dihexylisothiocyanothiophosphate
— 14,6 g (soit 0,11 mole) d'amino-5 mercapto-2 thiadiazole-1,3,4
— 50 ml de toluène
— 50 ml d'hexaméthylphosphotriamide

pendant 1 h 30 à 65 °C.

On obtient 44 g de produit dont la composition déterminée par analyse élémentaire est la suivante :

| | trouvée (%) | calculée (%) |
|---|---|---|
| phosphore | 7,40 | 6,8 |
| azote | 11,7 | 12,28 |
| soufre | 26,8 | 28,07 |
| carbone | 40,2 | 39,47 |
| hydrogène | 6,5 | 6,36 |

Le taux de transformation est de 7,8 %.
Le rendement est de 91,2 %.

Exemple 13

Préparation de la N(O,O dihexylphosphorothiono)-N (hydrogéno)-N' (hydrogéno)-N' (benzimidazolyl)thiourée de formule :

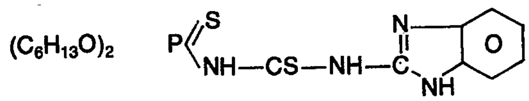

L'opération décrite dans l'exemple 10 est réalisée en présence de :
— 32,3 g (soit 0,10 mole) d'O,O dihexylisothiocyanothiophosphate
— 14,6 g (soit 0,11 mole) d'amino-2 benzimidazole
— 50 ml de toluène
— 50 ml d'hexaméthylphosphorotriamide
pendant 3 heures à 50 °C.

On obtient 47 g de produit dont la composition déterminée par analyse élémentaire est la suivante :

| | trouvée (%) | calculée (%) |
|---|---|---|
| phosphore | 7,1 | 6,80 |
| azote | 11,8 | 12,28 |
| soufre | 13,7 | 14,04 |
| carbone | 52,0 | 52,63 |
| hydrogène | 7,1 | 7,24 |

Le taux de transformation est de 38 %.
Le rendement est de 77 %.

Exemple 14

Préparation de la N(O,O dihexylphosphorothiono)-N (hydrogéno)-N' (morpholinyl)thiourée de fomule :

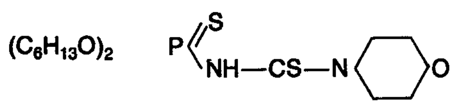

L'opération décrite à l'exemple 10 est réalisée en présence de :
— 32,3 g (soit 0,10 mole) d'O,O dihexylisothiocyanothiophosphate
— 9,6 g (soit 0,11 mole) de morpholine
— 50 ml de toluène
— 50 ml d'hexaméthylphosphorotriamide
pendant 3 heures à 50 °C.

On obtient 38 g de produit dont la composition déterminée par analyse élémentaire est la suivante :

| | trouvée (%) | calculée (%) |
|---|---|---|
| phosphore | 8,0 | 7,56 |
| azote | 6,5 | 6,83 |
| soufre | 15,2 | 15,61 |
| carbone | 49,5 | 49,76 |
| hydrogène | 8,4 | 8,54 |

Le taux de transformation est de 45 %.

Le rendement est de 80 %.

Exemple 15

Préparation de la N(O,O dihexylphosphorothiono)-N (hydrogéno)-N' (hydrogéno)-N' (trifluorométhyl-3 benzyl)thiourée de formule :

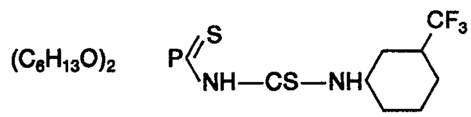

L'opération décrite à l'exemple 1 est réalisée en présence de :
— 32,3 g (soit 0,10 mole) d'O,O dihexylisothiocyanothiophosphate
— 16,25 g (0,11 mole) de m-trifluorométhylaniline
— 60 ml de pentane
pendant 1 heure à 28 °C.

On obtient 47 g de produit dont la composition déterminée par analyse élémentaire est la suivante :

| | trouvée (%) | calculée (%) |
|---|---|---|
| phosphore | 6,1 | 6,40 |
| soufre | 12,7 | 13,22 |
| azote | 5,1 | 5,79 |
| carbone | 50,2 | 49,59 |
| hydrogène | 6,9 | 6,61 |
| fluor | 10,9 | 11,78 |

Le taux de transformation est de 75 %.
Le rendement est de 72 %.

Exemple 16

Préparation de la N(O,O dihexylphosphorothiono)-N (hydrogéno)-N' (mercaptotrifluorométhylbenzyl)thiourée de formule :

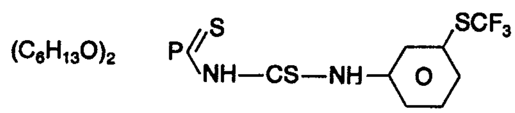

L'opération décrite à l'exemple 1 est réalisée en présence de :
— 32,3 g (soit 0,1 mole) d'O,O dihexylisothiocyanothiophosphate
— 21,2 g (soit 0,11 mole) de mercaptotrifluorométhylaniline
— 60 ml de pentane
pendant 2 heures à 35 °C.

On obtient 46 g de produit dont la composition déterminée par analyse élémentaire est la suivante :

| | trouvée (%) | calculée (%) |
|---|---|---|
| phosphore | 5,8 | 6,00 |
| soufre | 17,9 | 18,60 |
| azote | 5,0 | 5,43 |
| carbone | 46,6 | 46,51 |
| hydrogène | 6,3 | 6,20 |
| fluor | 10,8 | 11,05 |

Exemple 17

Préparation de la N(O,O dihexylphosphorothiono)-N (hydrogéno)-N' (hydrogéno)-N' (triéthoxysilylpropyl)thiourée de formule :

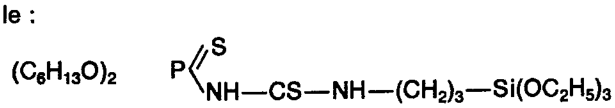

L'opération décrite à l'exemple 1 est réalisée en présence de :
— 32,3 g (soit 0,1 mole) d'O,O dihexylisothiocyanothiophosphate
— 24,2 g (soit 0,11 mole) de γ-aminopropyltriéthoxysilane
— 50 ml de toluène
pendant 1 h 30 mn à 35 °C.

On obtient 48 g de produit dont la composition déterminée par analyse élémentaire est la suivante :

| | trouvée (%) | calculée (%) |
|---|---|---|
| phosphore | 5,6 | 5,70 |
| soufre | 11,5 | 11,76 |
| azote | 4,8 | 5,14 |
| carbone | 49,3 | 48,53 |
| hydrogène | 9,3 | 9,01 |
| silicium | 4,90 | 5,15 |

le taux de transformation est de 100 %.
Le rendement est de 100 %.

Exemple 18

Préparation de la tris [[3(O,O dihexylphosphorothiono) ureido] 6 oxa-3-hexyl] amine, de formule :

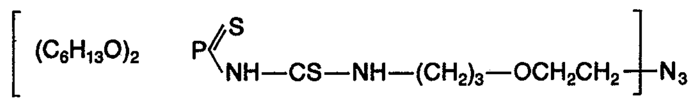

L'opération décrite à l'exemple 1 est réalisée en présence de :
— 48 g (soit 0,15 mole) d'O,O dihexylisothiocyanothiophosphate
— 17,6 g (soit 0,055 mole) de tris (amino-6 oxa-3 hexyl) amine
— 70 ml de toluène
pendant 2 heures à 50 °C.

On obtient 59 g de produit dont la composition déterminée par analyse élémentaire est la suivante :

| | trouvée (%) | calculée (%) |
|---|---|---|
| phosphore | 6,8 | 7,21 |
| soufre | 13,7 | 14,9 |
| azote | 6,9 | 7,60 |
| carbone | 51,3 | 50,27 |
| hydrogène | 8,9 | 8,84 |

Le taux de transformation est de 100 %.
Le rendement est de 100 %.

Exemple 19

Préparation de la N(O,O dihexylphosphorothiono)-N (hydrogéno)-N' (p-anilinophényl)-N' (butyl-2 pentyl)thiourée de formule :

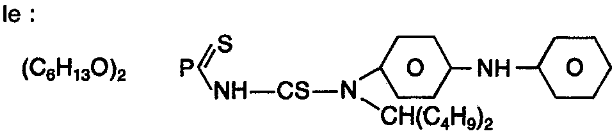

L'opération décrite à l'exemple 1 est réalisée en présence de :
— 32,3 g (soit 0,10 mole) d'O,O dihexylisothiocyanothiophosphate
— 34 g (soit 0,11 mole) de N(butyl-2 pentyl)N' phénylène diamine
— 60 ml de toluène
pendant 2 h 30 min à 45 °C.

On obtient 60 g de produit dont la composition déterminée par analyse élémentaire est la suivante :

| | trouvée (%) | calculée (%) |
|---|---|---|
| phosphore | 4,1 | 4,90 |
| soufre | 9,6 | 10,11 |
| azote | 7,1 | 6,64 |
| carbone | 65,3 | 64,45 |
| hydrogène | 8,7 | 8,85 |

Le taux de transformation est de 100 %.

Le rendement est de 100 %.

Exemple 20

Préparation du bis[N(O,O dihexylphosphorothiono)N (hydrogéno-N' (hydrogéno)thiourée] hexylène de formule :

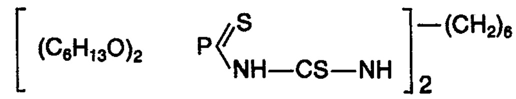

L'opération décrite à l'exemple 1 est réalisée en présence de :
- 51,6 g (soit 0,16 mole) d'O,O dihexylisothiocyanothiophosphate
- 10,2 g (soit 0,088 mole) d'hexaméthylènediamine
- 40 ml de toluène

pendant 1 heure à 27 °C.

On obtient 56 g de produit dont la composition déterminée par analyse élémentaire est la suivante :

| | trouvée (%) | calculée (%) |
|---|---|---|
| phosphore | 7,7 | 8,14 |
| soufre | 16,1 | 16,80 |
| azote | 6,9 | 7,35 |
| carbone | 51,0 | 50,39 |
| hydrogène | 8,9 | 8,92 |

Le taux de transformation est de 90 %.
Le rendement est de 86 %.

Exemple 21

Préparation de mélanges de tris (O,O dihexylphosphorothionothiocarbamyl) (polyisobuténylsuccinimido)1 tétraza 3,6,9,12 dodécanes.

Dans un ballon tricol de 250 ml, on charge 24,5 g (0,076 mole) d'O,O dihexylisothiocyanothiophosphate et 84,5 g (soit 0,076 at-g d'azote actif) d'un monopolyisobuténylsuccinimide contenant 3,10 % d'azote dont 1,26 % d'azote actif et provenant de la réaction de la tétraéthylène-pentamine et d'un anhydride polyisobuténylsuccinique d'indice d'acide égal à 74, obtenu par condensation de l'anhydride maléique sur un polyisobutène de masse moléculaire moyenne en nombre de 1 000. Le mélange est chauffé pendant 2 h 30 mn à 50 °C.

On obtient 87 g de produit dont la composition détrminée par analyse élémentaire est la suivante :

| | trouvée (%) |
|---|---|
| phosphore | 2,21 |
| soufre | 4,48 |
| azote total | 2,46 |

Exemple 22

Préparation du bis (O,O dihexylphosphorothiono thio carbamyl)3-6 bis (polyisobuténylsuccinimido)1-8 diazo-3-6 d'octane

Dans un ballon tricol de 250 ml, on charge 7 g (soit 0,0217 mole) d'O,O dihexylisothiocyanothiophosphate, et 55 g (soit 0,0217 at-g d'azote actif) d'un bis polyisobuténylsuccinimide contenant 1,2 % d'azote dont 0,6 % d'azote actif et provenant de la réaction de la triéthylène-tétramine et d'un anhydride polyisobuténylsuccinique d'indice égal à 74, obtenu par condensation de l'anhydride maléique sur un polyisobutène de masse moléculaire moyenne en nombre de 1 000.

Le mélange est chauffé pendant 2 h 30 mn à 45 °C.

On obtient 62 g de produit dont la composition déterminée par analyse élémentaire est la suivante :

| | trouvée (%) |
|---|---|
| phosphore | 1,12 |
| soufre | 2,50 |
| azote | 1,82 |

Exemple 23

Préparation de la N(O,O dihexylphosphoro)-N (hydrogéno)-N' (dipropyl)thiourée de formule :

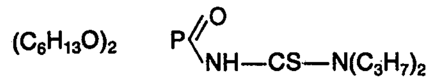

Selon un mode opératoire équivalent à celui décrit à l'exemple 1, on met en contact :
— 15,35 g (soit 0,05 mole) d'O,O dihexylisothiocyanophosphate
— 5,05 g (soit 0,05 mole) de dipropylamine
pendant 4 heures à température ambiante.
On obtient 21 g de produit dont la composition déterminée par analyse élémentaire est la suivante :

| | trouvée (%) | calculée (%) |
|---|---|---|
| phosphore | 7,4 | 7,60 |
| soufre | 7,2 | 7,84 |
| azote | 6,1 | 6,86 |
| carbone | 55,2 | 55,88 |
| hydrogène | 9,8 | 10,05 |

Le taux de transformation est de 92 %.
Le rendement est de 100 %.
L'O,O dihexylisothiocyanophosphate peut être obtenu dans des conditions équivalentes à celles décrites à l'exemple 1, pour obtenir l'O,O dihexylisothiocyanothiophosphate à partir de thiocyanate de potassium et d'O,O dihexyl-chlorophosphate.
La composition du produit obtenu déterminée par analyse élémentaire est la suivante :

| | trouvée (%) | calculée (%) |
|---|---|---|
| phosphore | 9,8 | 10,10 |
| soufre | 10 | 10,42 |
| azote | 4,10 | 4,56 |
| carbone | 50,60 | 50,81 |
| hydrogène | 8,35 | 8,47 |

Exemple 24

Préparation de la N(O,O dihexylphosphoro)-N (hydrogéno)-N' (hydrogéno)-N' (dodécyl)thiourée de formule :

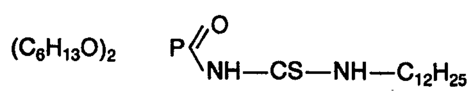

Selon un mode opératoire équivalent à celui décrit à l'exemple 4, on met en contact :
30,7 g (soit 0,10 mole) d'O,O dihexylisothiocyanophosphate
20,5 g (soit 0,11 mole) de dodécylamine
On obtient 47 g de produit dont la composition déterminée par analyse élémentaire est la suivante :

| | trouvée (%) | calculée (%) |
|---|---|---|
| phosphore | 6,15 | 6,3 |
| soufre | 5,3 | 6,5 |
| azote | 5,3 | 5,69 |
| carbone | 59,9 | 60,98 |
| hydrogène | 10,5 | 10,77 |

Le taux de transformation est de 93,5 %.
Le rendement est de 98 %.

Exemple 25

Préparation de la N(O,O dihexylphosphoro)-N (hydrogéno)N' (hydrogéno)N' (triéthoxysilylpropyl)thiourée de formule :

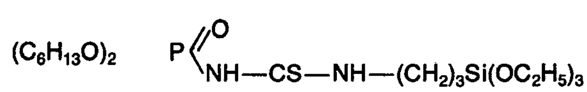

Selon un mode opératoire équivalent à celui décrit à l'exemple 16, on met en contact :
— 30,7 g (soit 0,10 mole) d'O,O dihexylisothiocyanophosphate
— 24,2 g (soit 0,11 mole) de γ-aminopropyltriéthoxysilane.
On obtient 52 g de produit dont la composition déterminée par analyse élémentaire est la suivante :

| | trouvée (%) | calculée (%) |
|---|---|---|
| phosphore | 5,7 | 5,87 |
| soufre | 5,85 | 6,06 |
| azote | 5,1 | 5,30 |
| carbone | 49,7 | 50,0 |
| hydrogène | 9,1 | 9,28 |
| silicium | 5,2 | 5,30 |

Le taux de transformation est de 86 %.
Le rendement est de 92,5%.

Exemple 26

Préparation de la N(S,S dihexylphosphorothiono)-N (hydrogéno)-N' (dipropyl)thiourée de formule :

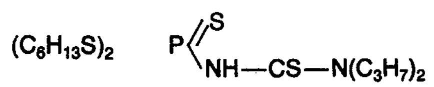

Selon un mode opératoire équivalent à celui décrit à l'exemple 1, on met en contact :
— 35,5 g (0,1 mole) de S,S dihexylisothiocyanothiophosphate
— 10 g (0,1 mole) de dipropylamine
pendant 3/4 heures à 25 °C.
On obtient 41 g de produit dont la composition déterminée par analyse élémentaire est la suivante :

| | trouvée (%) | calculée (%) |
|---|---|---|
| phosphore | 6,7 | 6,8 |
| soufre | 27,5 | 28,07 |
| azote | 5,9 | 6,14 |
| carbone | 49,8 | 50,0 |
| hydrogène | 8,75 | 8,99 |

Le taux de transformation des de 79 %.
Le rendement est de 84 %.
Le S,S dihexylisothiocyanothiophosphate utilisé peut être obtenu dans des conditions équivalentes à celles décrites à l'exemple 1, pour obtenir l'O,O dihexylisothiocyanothiophosphate à partir de thiocyanate de potassium et de S,S dihexylchlorothiophosphate.
La composition du produit obtenu déterminée par analyse élémentaire est la suivante :

| | trouvée (%) | calculée (%) |
|---|---|---|
| phosphore | 8,5 | 8,73 |
| soufre | 35,5 | 36,06 |
| azote | 3,7 | 3,94 |
| carbone | 43,7 | 43,94 |
| hydrogène | 7,2 | 7,32 |

Exemple 27

Préparation de la N(O,O diallylphosphorothiono)-N (hydrogéno)-N' (dipropyl)thiourée de formule :

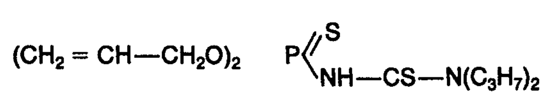

Selon un mode opératoire équivalent à celui décrit à l'exemple 1, on met en contact :
— 23,5 g (0,1 mole) d'O,O diallylisothiocyanothiophosphate
— 10 g (0,1 mole) de dipropylamine
On obtient 30 g d'un produit dont la composition déterminée par analyse élémentaire est la suivante :

| | trouvée (%) | calculée (%) |
|---|---|---|
| phosphore | 9,1 | 9,23 |
| soufre | 18,7 | 19,05 |
| azote | 8,1 | 8,33 |
| carbone | 46,6 | 46,43 |
| hydrogène | 7,5 | 7,44 |

Le taux de transformation est de 94 %.

Le rendement est de 97 %.

L'O,O diallylisothiocyanothiophosphate utilisé peut être obtenu dans des conditions équivalentes à celles décrites dans l'exemple 1, pour obtenir l'O,O dihexylisothiocyanothiophosphate, à partir de thiocyanate de potassium et de l'O,O diallylchlorothiophosphate.

La composition du produit obtenu déterminée par analyse élémentaire est la suivante :

| | trouvée (%) | calculée (%) |
|---|---|---|
| phosphore | 13,0 | 13,19 |
| soufre | 26,9 | 27,23 |
| azote | 5,7 | 5,96 |
| carbone | 35,7 | 35,74 |
| hydrogène | 4,3 | 4,26 |

Exemple 28

Préparation de la N(O,O dibutylphosphorothiono)-N (hydrogéno)N' (dipropyl)thiourée de formule :

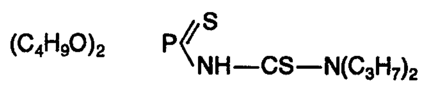

Selon un mode opératoire équivalent à celui décrit à l'exemple 1, on met en contact :

— 26,5 g (0,1 mole) d'O,O dibutylisothiocyanothiophosphate

— 10 g (0,1 mole) de dipropylamine

On obtient 34 g d'un produit dont la composition déterminée par analyse élémentaire est la suivante :

| | trouvée (%) | calculée (%) |
|---|---|---|
| phosphore | 8,3 | 8,42 |
| soufre | 17,1 | 17,39 |
| azote | 7,4 | 7,61 |
| carbone | 49,1 | 48,91 |
| hydrogène | 9,2 | 8,97 |

Le taux de transformation est de 92 %.

Le rendement est de 100 %.

L'O,O dibutylisothiocyanothiophosphate utilisé peut être obtenu dans des conditions équivalentes à celles décrites dans l'exemple 1, pour obtenir l'O,O dibutylisothiocyanothiophosphate à partir du thiocyanate de potassium et de l'O,O dibutylchlorophosphate.

La composition du produit obtenu déterminée par analye élémentaire est la suivante :

| | trouvée (%) | calculée (%) |
|---|---|---|
| phosphore | 11,4 | 11,61 |
| soufre | 23,7 | 23,97 |
| azote | 5,0 | 5,24 |
| carbone | 40,6 | 40,45 |
| hydrogène | 6,8 | 6,74 |

Exemple 29

Préparation de la N(O,O dinonylphénylphosphorothiono)-N (hydrogéno)-N' (dipropyl)thiourée de formule :

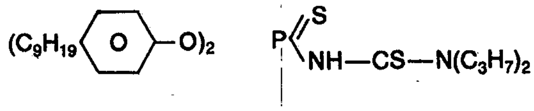

Selon un mode opératoire équivalent à celui décrit dans l'exemple 1, on met en contact :
— 10,0 g (0,1 mole) de dipropylamine
— 55,9 g (0,1 mole) d'O,O dinonylphénylisothiocyanothiophosphate
On obtient 62 g d'un produit dont la composition déterminée par analyse élémentaire est la suivante :

| | trouvée (%) | calculée (%) |
|---|---|---|
| phosphore | 4,5 | 4,70 |
| soufre | 9,4 | 9,70 |
| azote | 4,0 | 4,24 |
| carbone | 67,6 | 67,27 |
| hydrogène | 9,4 | 9,24 |

Le taux de transformation est de 90 %.
Le rendement est de 98 %.
L'O,O dinonylphénylthiocyanothiophosphate utilisé peut être obtenu dans des conditions équivalentes à celles décrites dans l'exemple 1 pour obtenir l'O,O dihexylisothiocyanothiophosphate à partir de thiocyanate de potassium et de l'O,O dinonylphénylchlorothiophosphate.
La composition du produit obtenu déterminée par analyse élémentaire est la suivante :

| | trouvée (%) | calculée (%) |
|---|---|---|
| phosphore | 5,4 | 5,55 |
| soufre | 11,3 | 11,45 |
| azote | 2,4 | 2,50 |
| carbone | 66,2 | 66,55 |
| hydrogène | 8,3 | 8,23 |

Exemple 30

Préparation de la N(O,O dihexylphosphorothiono)-N (hydrogéno)-N' (dipropyl)urée de formule :

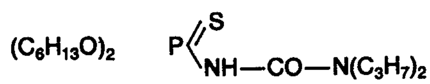

Selon un mode opératoire équialent à celui décrit à l'exemple 1, on met en contact :
— 30,7 g (0,1 mole) d'O,O dihexylisocyanothiophosphate
— 10 g (0,1 mole) de dipropylamine
On obtient 38 g d'une huile dont la composition déterminée par analyse élémentaire est la suivante :

| | trouvée (%) | calculée (%) |
|---|---|---|
| phosphore | 7,5 | 7,6 |
| azote | 6,7 | 6,86 |
| soufre | 7,6 | 7,84 |
| carbone | 55,7 | 55,88 |
| hydrogène | 9,9 | 10,05 |

Le taux de transformation est de 95%.
Le rendement est de 98 %.
L'O,O dihexylisocyanothiophosphate utilisé peut être obtenu dans des conditions équivalentes à celles décrites dans l'exemple 1, à partir d'isocyanate de potassium et de l'O,O dihexylchlorothiophosphate.
La composition du produit obtenu déterminée par analyse élémentaire est la suivante :

| | trouvée (%) | calculée (%) |
|---|---|---|
| phosphore | 10,0 | 10,10 |
| azote | 4,4 | 4,56 |
| soufre | 10,2 | 10,42 |
| carbone | 50,3 | 50,83 |
| hydrogène | 8,4 | 8,47 |

Exemple 31

Préparation de la N(O,O dihexylphosphoro)-N (hydrogéno)-N' (dipropyl)urée de formule :

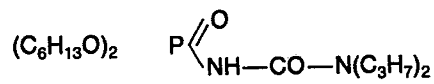

Selon un mode opératoire équivalent à celui décrit à l'exemple 1, on met en contact :

— 29,1 g (0,1 mole) d'O,O dihexylisocyanophosphate

— 10 g (0,1 mole) de dipropylamine

On obtient 37 g d'une huile dont la composition déterminée par analyse élémentaire est la suivante :

| | trouvée (%) | calculée (%) |
|---|---|---|
| phosphore | 7,8 | 7,91 |
| azote | 7,0 | 7,14 |
| carbone | 58,0 | 58,16 |
| hydrogène | 10,4 | 10,46 |

Le taux de transformation est de 94 %.

Le rendement est de 96 %.

L'O,O dihexylisocyanophosphate utilisé peut être obtenu dans des conditions équivalentes à celles décrites à l'exemple 23 à partir de l'isocyanate de potassium et de l'O,O dihexylchlorophosphate.

La composition du produit obtenu déterminée par analyse élémentaire est la suivante :

| | trouvée (%) | calculée (%) |
|---|---|---|
| phosphore | 10,4 | 10,65 |
| azote | 4,6 | 4,82 |
| carbone | 53,4 | 53,61 |
| hydrogène | 8,8 | 8,93 |

Exemple 32

On prépare une composition lubrifiante par addition à une huile IOW 30 d'une quantité de produit obtenu à l'un des exemples 1 à 31, correspondant à 0,9 % de phosphore en poids.

Les propriétés mécaniques de cette composition sont testées sur :

1. Machine 4 billes selon la norme ASTM D 2 783-69 T ; ce test donne le diamètre en mm de l'empreinte sous une charge de grippage de 70, 90, 110 et 130 kg ainsi que la charge de soudure en kg.

2. Machine Falex ; ce test donne l'usure de l'axe (c'est-à-dire de l'éprouvette d'usure) en mg au bout de 30 mn sous une pression de 500 lbs (271,5 kg).

La tenue à l'oxydation de cette composition est évaluée par le test d'oxydation Mobil consistant à oxyder 33 g d'huile contenant l'additif, en la chauffant à 180 °C pendant 48 heures en présence de catalyseurs d'oxydation (Pb-Cu) sous un débit d'air de 13,9 l/h et à mesurer l'augmentation de viscosité à 210 °F (98,9 °C) de l'huile oxydée par rapport à l'huile neuve.

Des tests comparables sont réalisés sur des compositions dans lesquelles le produit de l'un des exemples 1 à 31, est remplacé par la même quantité, exprimée en % de phosphore, et l'un des additifs du commerce suivants, contenant tous du phosphore et de l'azote, à l'exception de l'additif G :

— additif A : « TLA 202 » commercialisé par TEXACO Inc.

— additif B : « Improvex 33 » commercialisé par RHONE-POULENC

— additif C : « Ortholéum 535 » commercialisé par DU PONT DE NEMOURS

— additif D : « Eca 5 215 » commercialisé par EXXON

— additif E : « Oloa 259 » commercialisé par ORONITE

— additif F : « Lubrizol 797 » commercialisé par LUBRIZOL

— additif G : « à base d'un mélange d'alkyldithiophosphate de zinc dont les radicaux alkyl contiennent de 4 à 6 atomes de carbone.

Le résultat de l'ensemble de ces tests figure aux tableaux I, I', I'', et I'''.

On constate que les compositions faisant l'objet de l'invention possèdent un très bon niveau général de performances en ce qui concerne leurs propriétés mécaniques et présentent une bonne tenue de ces performances malgré l'oxydation. Les propriétés antioxydantes sont également très bonnes.

Exemple 33

On prépare des compositions lubrifiantes par addition à une huile IOW 30 du produit préparé à l'exemple 2, à différentes concentrations.

Ces compositions sont testées selon les méthodes décrites à l'exemple précédent ; on teste en outre ces compositions sur Machine 4 billes sous une charge de 150 kg.

Le résultat de ces tests figure au tableau II.

On constate que ces compositions possèdent un très bon niveau général de performances en ce qui concerne leurs propriétés mécaniques et antioxydantes même à basse concentration en additif.

TABLEAU I

| Produits des Exemples | % en poids de produit | Propriétés mécaniques | | | | | | | Oxydation |
|---|---|---|---|---|---|---|---|---|---|
| | | Avant oxydation | | | | | | après oxydation | |
| | | Grippage-emprunte en mm | | | | charge de soudure en kg | Falex en mg | Grippage emprunte en mm - 100 kg - | Augmentation de viscosité % |
| | | 70 kg | 90 kg | 110 kg | 130 kg | | | | |
| 1 | 1,42 | - | 0,43 | 0,50 | 0,91 | 300 | 1,9 | 1,9 | 40 |
| 2 | 1,37 | - | 0,48 | 0,49 | 0,90 | 250 | 3,3 | 2,0 | 30 |
| 3 | 1,64 | - | 0,46 | 1,90 | - | 250 | 5,2 | 1,4 | 40 |
| 4 | 1,79 | - | 0,42 | 1,70 | - | 250 | 3,0 | 1,7 | 20 |
| 5 | 1,43 | - | 0,48 | 0,50 | 2,5 | 300 | 2,4 | 1,8 | 20 |
| 6 | 1,52 | - | 0,47 | 0,50 | 2,0 | 300 | 6,0 | 1,8 | 30 |
| 7 | 1,47 | - | 0,47 | 0,52 | 2,5 | 300 | 4,0 | 1,9 | 30 |
| 8 | 1,37 | - | 0,46 | 0,53 | 0,95 | 300 | 1,8 | 1,7 | 30 |
| 9 | 1,54 | - | 0,42 | 1,50 | - | 250 | 3,0 | 1,9 | 40 |
| 10 | 1,16 | - | 0,44 | 1,80 | - | 250 | 3,4 | 1,6 | 30 |

TABLEAU I'

| Produits des Exemples | % en poids de produit | Propriétés mécaniques | | | | | | | Oxydation |
|---|---|---|---|---|---|---|---|---|---|
| | | Avant oxydation | | | | | | après oxydation | Augmentation de viscosité % |
| | | Grippage-emprunte en mm | | | | charge de soudure en kg | Falex en mg | Grippage emprunte en mm - 100 kg - | |
| | | 70 kg | 90 kg | 110 kg | 130 kg | | | | |
| 11 | 1,43 | - | 0,45 | 1,90 | - | 250 | 2,9 | 2,0 | 150 |
| 12 | 1,35 | - | 0,44 | 0,60 | 2,5 | 300 | 0,8 | 1,6 | 50 |
| 13 | 1,41 | - | 0,46 | 1,40 | - | 250 | 4,1 | 2,0 | 150 |
| 14 | 1,25 | - | 0,48 | 1,45 | - | 250 | 3,8 | 2,0 | 120 |
| 15 | 1,64 | - | 0,44 | 0,48 | 0,92 | 300 | 3,6 | 1,7 | 20 |
| 16 | 1,72 | - | 0,45 | 0,49 | 0,91 | 300 | 3,4 | 1,8 | 30 |
| 17 | 1,79 | - | 0,40 | 0,52 | 2,0 | 300 | 3,4 | 1,7 | 30 |
| 18 | 1,47 | - | 0,43 | 0,51 | 1,5 | 300 | 3,7 | 1,4 | 60 |
| 19 | 2,44 | - | 0,49 | 0,43 | 2,5 | 300 | 3,6 | 1,6 | 20 |
| 20 | 1,30 | - | 0,50 | 0,90 | - | 300 | 3,7 | 1,9 | 20 |

TABLEAU I"

| Produits des Exemples | % en poids de produit | Propriétés mécaniques | | | | | | | Oxydation |
|---|---|---|---|---|---|---|---|---|---|
| | | Avant oxydation | | | | | | Après oxydation | Augmentation de viscosité % |
| | | Grippage - emprunte en mm | | | | charge de soudure en kg | Falex en mg | Grippage emprunte en mm - 100 kg - | |
| | | 70 kg | 90 kg | 110 kg | 130 kg | | | | |
| 21 | 4,52 | - | 0,45 | 1,50 | - | 250 | 6,5 | 2,0 | 150 |
| 22 | 8,93 | - | 0,47 | 1,80 | - | 250 | 4,1 | 2,0 | 150 |
| 23 | 1,35 | - | 0,43 | 0,49 | 0,93 | 300 | 3,4 | 1,6 | 70 |
| 24 | 1,63 | - | 0,47 | 1,80 | - | 250 | 3,5 | 2,0 | 50 |
| 25 | 1,75 | - | 0,42 | 0,53 | 2,5 | 300 | 3,1 | 1,8 | 100 |
| 26 | 1,49 | - | 0,40 | 0,51 | 0,92 | 300 | 3,2 | 1,7 | 30 |
| 27 | 1,10 | - | 0,49 | 0,55 | 2,4 | 250 | 3,8 | 2,0 | 100 |
| 28 | 1,20 | - | 0,43 | 0,48 | 0,90 | 300 | 3,0 | 1,8 | 30 |
| 29 | 2,22 | - | 0,45 | 0,53 | 0,97 | 250 | 3,2 | 1,9 | 50 |
| 30 | 1,33 | - | 0,47 | 0,50 | 2,5 | 250 | 3,2 | 1,9 | 30 |
| 31 | 1,28 | - | 0,46 | 0,52 | - | 250 | 3,5 | 2,0 | 80 |

TABLEAU I'''

| Produits des Exemples | % en poids de produit | Propriétés mécaniques | | | | | | | Oxydation |
|---|---|---|---|---|---|---|---|---|---|
| | | Avant oxydation | | | | | | après oxydation | Augmentation de viscosité % |
| | | Grippage-emprunte en mm | | | | charge de soudure en kg | Falex en mg | Grippage emprunte en mm - 100 kg - | |
| | | 70 kg | 90 kg | 110 kg | 130 kg | | | | |
| A | 10 | 0,41 | 2 | - | - | 200 | 8,2 | - | en masse |
| B | 1,24 | 0,41 | 0,47 | 2,5 | - | 250 | 14,9 | 1.9 | 50 |
| C | 1,47 | - | 2,1 | - | - | 250 | 6,1 | - | en masse |
| D | 3,73 | - | 0,46 | 0,48 | 2,5 | 300 | 9,6 | 1,9 | 50 |
| E | 4,17 | - | 0,41 | 1,9 | - | 250 | 8,1 | 2,4 | 150 |
| F | 4,08 | - | 2,6 | - | - | 200 | 1,0 | 1,8 | 300 |
| G | 1,35 | - | 0,42 | 2,2 | - | 250 | 10,5 | 1,9 | 80 |

TABLEAU II

| % en poids de produit | Propriétés mécaniques | | | | | | | | Oxydation |
|---|---|---|---|---|---|---|---|---|---|
| | Avant oxydation | | | | | | | après oxydation | |
| | Grippage-Emprunte en mm | | | | | charge de soudure en kg | Falex en mg | Grippage Emprunte en mm - 100 kg - | Augmentation de viscosité en % |
| | 70 kg | 90 kg | 110 kg | 130 kg | 150 kg | | | | |
| 0,5 | - | 0,48 | 0,5 | 1,1 | - | 200 | 2,7 | 1,8 | 50 |
| 1,35 | - | 0,48 | 0,49 | 0,9 | 2,5 | 250 | 3,3 | 2 | 30 |
| 2,5 | - | 0,48 | 0,49 | 0,7 | 1,1 | 250 | 3,9 | 1,8 | 30 |
| 4 | - | 0,48 | 0,50 | 0,5 | 0,9 | 250 | 7,3 | 2 | 30 |
| 5 | - | 0,47 | 0,51 | 0,5 | 0,55 | 250 | 10,6 | 1,8 | 30 |

**Revendications**

1. Compositions lubrifiantes contenant au moins une huile lubrifiante et de 0,2 à 10 % en poids d'au moins un additif extrême-pression et anti-usure contenant du phosphore et de l'azote caractérisées en ce que ledit additif contient au moins un motif de formule :

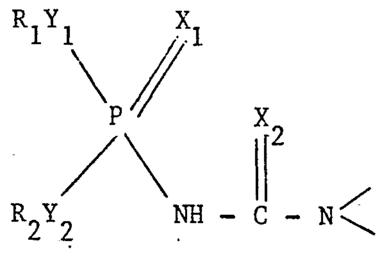

où $Y_1$, $Y_2$, $X_1$ et $X_2$ sont semblables ou différents et représentent un atome d'oxygène ou de soufre ; $R_1$ et $R_2$ sont semblables ou différents et représentent un radical alkyle éventuellement ramifié en $C_3$-$C_{20}$, un radical alkényle éventuellement ramifié en $C_3$-$C_{24}$, un radical phényle, un radical phényle substitué par au moins un groupe alkyle en $C_1$-$C_{24}$, ou par un radical cycloalkyle en $C_3$-$C_{10}$, et en ce qu'il est obtenu par action d'un composé choisi parmi les isocyanates et isothiocyanates de formule (I) :

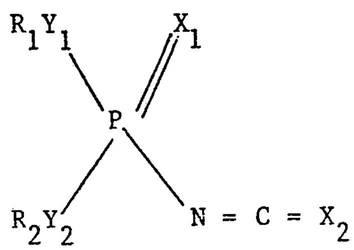

où $Y_1$, $Y_2$, $X_1$, $X_2$, $R_1$ et $R_2$ ont la définition donnée ci-dessus, sur un composé comportant au moins un radical $-\underset{|}{N}-H$.

2. Compositions selon la revendication 1, caractérisées en ce que les radicaux $R_1$ et $R_2$ représentent un radical alkyle éventuellement ramifié en $C_4$-$C_{12}$, un radical alkényle éventuellement ramifié en $C_3$-$C_{18}$, un radical phényle éventuellement substitué par un radical alkyle en $C_1$-$C_{12}$ ou par un radical cycloalkyle en $C_5$-$C_8$.

3. Compositions selon la revendication 1 ou la revendication 2, caractérisées en ce que le produit de formule I est choisi parmi l'O,O dihexylisothiocyanothiophosphate, l'O,O dibutylisothiocyano thiophosphate, l'O,O dinonylphénylisothiocyanothiophosphate, l'O,O diallylisothiocyanothiophosphate, l'O,O dihexylisocyanothiophosphate, l'O,O dihexylisocyanophosphate, le S.S dihexylisothiocyanophosphate, l'O,O dihexylisothiocyanophosphate.

4. Compositions selon la revendication 1, caractérisées en ce que chacune des deux valences restantes du radical $-\underset{|}{N}-H$ est satisfaite par :

— de l'hydrogène
— un radical alkyle en $C_1$-$C_{24}$, éventuellement substitué par un groupe hydroxy ou triéthoxysilyle ;
— un radical alkylène en $C_2$-$C_{12}$
— le radical aza-7 dioxa-4,10 tridécylène N substitué par un groupe oxa-3' hexylène
— un radical alkényle en $C_3$-$C_{24}$,
— un radical alkynyle en $C_3$-$C_{16}$,
— un radical cycloalkyle en $C_5$-$C_{12}$,
— un radical polycycloalkyle en $C_9$-$C_{18}$,
— un radical phényle éventuellement substitué par un groupe hydroxy, trifluorométhyle, mercapto-trifluorométhyle ou anilino
— un radical hétérocyclique azoté éventuellement accolé à un cycle benzénique
— un radical hétérocyclique contenant de l'azote et du soufre comme hétéroéléments et accolé à un cycle benzénique
— un radical hétérocyclique contenant de l'azote et du soufre comme hétéroéléments et substitué par un groupe mercapto
— un radical organique formant avec ledit atome d'azote un hétérocycle contenant éventuellement de l'oxygène comme autre hétéroélément.

5. Compositions selon la revendication 4, caractérisées en ce que le radical alkyle lié au radical

—N—H contient de 1 à 18 atomes de carbone, le radical alkényle lié au radical —N—H contient de 3 à 18 atomes de carbone, le radical alkynyle lié au radical —N—H contient de 3 à 8 atomes de carbone, le radical cycloalkoyle, lié au radical —N—H contient de 5 à 9 atomes de carbone.

6. Compositions selon l'une des revendications 1, 4 ou 5, caractérisées en ce que ledit composé azoté est choisi parmi :
— l'ammoniac,
— les alkylmonoamines en $C_3$-$C_{12}$,
— les hydroxymonoamines en $C_3$-$C_{12}$,
— les alkylènediamines en $C_2$-$C_{12}$,
— les polyalkylènepolyamines,
— la tris(oxa-3 amino-6 hexyl) amine,
— les alkénylsuccinimides dérivés des polyamines et dont le radical alkényle présente plus de 30 atomes de carbone.
— les alkénylamines dont le radical alkényle présente plus de 20 atomes de carbone,
— le γ-aminopropyl triéthoxysilane,
— la cyclohexylamine,
— l'aniline,
— l'o-aminophénol,
— le m-trifluorométhylaniline,
— la mercaptotrifluorométhylaniline,
— la N(butyl-2 pentyl)N' (phénylène diamine),
— l'amino-3 triazole-1,2,3,
— l'amino-2 benzothiazole,
— l'amino-2 benzimidazole,
— l'amino-5 mercapto-2 thiadiazole-1,3,4,
— la morpholine.

7. Compositions selon la revendication 1, caractérisées en ce que l'action entre le composé de formule I et le composé azoté est réalisée à une température comprise entre 20 et 100 °C pendant 1/2 à 10 heures avec un rapport nombre de groupements isocyanate ou isothiocyanate/nombre de groupements NH actifs compris entre 0,25 et 1,25.

8. Compositions selon la revendication 6, caractérisées en ce que l'action entre le composé de formule I et le composé azoté est réalisée à une température comprise entre 20 et 70 °C pendant 3/4 à 8 heures.

**Claims**

1. Lubricating compositions containing at least one lubricating oil and from 0.2 to 10 % by weight of at least one extreme-pressure and anti-wear additive containing phosphorus and nitrogen, characterised in that the said additive contains at least one unit of the formula :

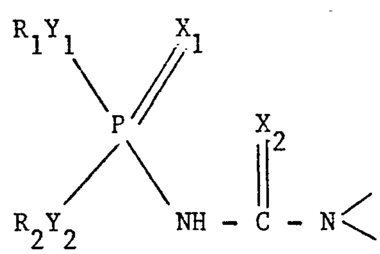

in which $Y_1$, $Y_2$, $X_1$ and $X_2$ are similar or different and represent an oxygen or sulphur atom and $R_1$ and $R_2$ are similar or different and represent an optionally branched $C_3$-$C_{20}$ alkyl radical, an optionally branched $C_3$-$C_{24}$ alkenyl radical, a phenyl radical or a phenyl radical substituted by at least one $C_1$-$C_{24}$ alkyl group or by a $C_3$-$C_{10}$ cycloalkyl radical, and in that it is obtained by reacting a compound chosen from amongst the isocyanates and isothiocyanates of the formula (I) :

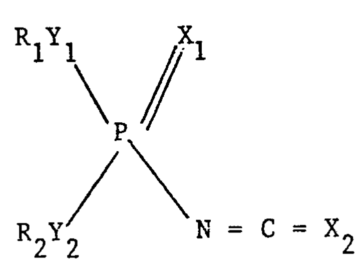

in which $Y_1$, $Y_2$, $X_1$, $X_2$, $R_1$ and $R_2$ have the definition given above, with a compound containing at least one radical —N—H.

2. Compositions according to Claim 1, characterised in that the radicals $R_1$ and $R_2$ represent an optionally branched $C_4$-$C_{12}$ alkyl radical, an optionally branched $C_3$-$C_{18}$ alkenyl radical or a phenyl radical optionally substituted by a $C_1$-$C_{12}$ alkyl radical or by a $C_5$-$C_8$ cycloalkyl radical.

3. Compositions according to Claim 1 or Claim 2, characterised in that the product of the Formula I is chosen from amongst, O,O-dihexyl isothiocyanothiophosphate, O,O-dibutyl isothiocyanothiophosphate, O,O-dinonylphenyl isothiocyanothiophosphate, O,O-diallyl isothiocyanothiophosphate, O,O-dihexyl isocyanothiophosphate, O,O-dihexyl isocyanophosphate, S,S-dihexyl isothiocyanophosphate and O,O-dihexyl isothiocyanophosphate.

4. Compositions according to Claim 1, characterised in that each of the two remaining valencies of the radical —N—H is satisfied by : hydrogen, a $C_1$-$C_{24}$ alkyl radical optionally substituted by a hydroxyl or triethoxysilyl group, a $C_2$-$C_{12}$ alkylene radical, the 7-aza-4,10-dioxatridecylene radical N substituted by a 3′-oxahexylene group, a $C_3$-$C_{24}$ alkenyl radical, a $C_3$-$C_{16}$ alkynyl radical, a $C_5$-$C_{12}$ cycloalkyl radical, a $C_9$-$C_{18}$ polycycloalkyl radical, a phenyl radical optionally substituted by a hydroxyl, trifluoromethyl, mercaptotrifluoromethyl or anilino group, a nitrogen-containing heterocyclic radical optionally fused to a benzene ring, a heterocyclic radical containing nitrogen and sulphur as hetero-elements and fused to a benzene ring, a heterocyclic radical containing nitrogen and sulphur as hetero-elements substituted by a mercapto group, or an organic radical forming, with the said nitrogen atom, a heterocyclic ring optionally containing oxygen as another hetero-element.

5. Compositions according to Claim 4, characterised in that the alkyl radical bonded to the radical —N—H contains from 1 to 18 carbon atoms, the alkenyl radical bonded to the radical —N—H contains from 3 to18 carbon atoms, the alkynyl radical bonded to the radical —N—H contains from 3 to 8 carbon atoms and the cycloalkyl radical bonded to the radical —N—H contains from 5 to 9 carbon atoms.

6. Compositions according to one of Claims 1, 4 or 5, characterised in that the said nitrogen-containing compound is chosen from amongst: ammonia, $C_3$-$C_{12}$ alkylmonoamines, $C_3$-$C_{12}$ hydroxymonoamines, $C_2$-$C_{12}$ alkylene diamines, polyalkylene polyamines, tris-(3-oxa-6-amino-hexyl)-amine, alkenylsuccinimides which are derived from polyamines and in which the alkenyl radical has more than 30 carbon atoms, alkenylamines in which the alkenyl radical has more than 20 carbon atoms, γ-aminopropyltriethoxysilane, cyclohexylamine, aniline, o-aminophenol, m-trifluoromethylaniline, mercaptotrifluoromethylaniline, N-(2-butylpentyl)-N′-(phenylenediamine), 3-amino-1,2,3-triazole, 2-aminobenzothiazole, 2-aminobenzimidazole, 5-amino-2-mercapto-1,3,4-thiadiazole and morpholine.

7. Compositions according to Claim 1, characterised in that the reaction of the compound of the Formula I with the nitrogen-containing compound is carried out at a temperature between 20 and 100 °C for 1/2 to 10 hours, with a ratio number of isocyanate or isothiocyanate groups/number of active NH groups of between 0.25 and 1.25.

8. Compositions according to Claim 7, characterised in that the reaction of the compound of the Formula I with the nitrogen-containing compound is carried out at a temperature between 20 and 70 °C for 3/4 to 8 hours.

**Ansprüche**

1. Schmiermittelzubereitungen, die zumindest ein Schmieröl sowie 0,2 bis 10 Gew.-% mindestens eines phosphor- und stickstoffhaltigen Hochdruck- und Anti-Verschleißzusatzes enthalten, dadurch gekennzeichnet, daß dieser Zusatz mindestens eine Gruppierung der allgemeinen Formel

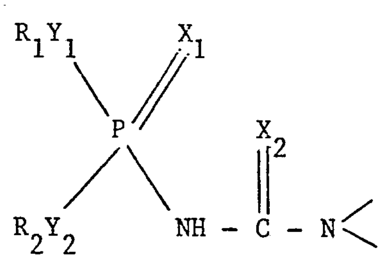

enthält, in der $Y_1$, $Y_2$, $X_1$ und $X_2$ gleich oder verschieden sind und für ein Sauerstoff- oder ein Schwefelatom stehen und $R_1$ und $R_2$ gleich oder verschieden sind und eine gegebenenfalls verzweigte

$C_3$-$C_{20}$ Alkylgruppe, eine gegebenenfalls verzweigte $C_3$-$C_{24}$ Alkenylgruppe, eine Phenylgruppe oder eine Phenylgruppe substituiert mit mindestens einer $C_1$-$C_{24}$ Alkylgruppe oder mit einer $C_3$-$C_{10}$ Cycloalkylgruppe bedeuten, sowie dadurch, daß er erhalten worden ist durch Einwirkung einer Verbindung ausgewählt aus Isocyanaten und Isothiocyanaten der allgemeinen Formel I

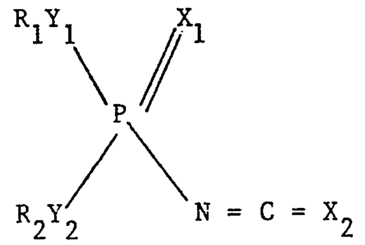

in der $Y_1$, $Y_2$, $X_1$, $X_2$, $R_1$ und $R_2$ die oben angegebene Bedeutung haben, auf eine Verbindung, die mindestens eine Gruppe $-\underset{|}{N}-H$ enthält.

2. Zubereitungen nach Anspruch 1, dadurch gekennzeichnet, daß die Gruppen $R_1$ und $R_2$ eine gegebenenfalls verzweigte $C_4$-$C_{12}$ Alkylgruppe, eine gegebenenfalls verzweigte $C_3$-$C_{18}$ Alkenylgruppe oder eine Phenylgruppe gegebenenfalls substituiert mit einer $C_1$-$C_{12}$ Alkylgruppe oder mit einer $C_5$-$C_8$ Cycloalkylgruppe bedeuten.

3. Zubereitungen nach Anspruch 1 oder 2, dadurch gekennzeichnet, daß das Produkt der Formel I ausgewählt wird unter O,O-Dihexylisothiocyanothiophosphat, O,O-Dibutylisothiocyanothiophosphat, O,O-Dinonylphenylisothiocyanothiophosphat, O,O-Diallylisothiocyanothiophosphat, O,O-Dihexylisocyanothiophosphat, O,O-Dihexylisocyanophosphat, S,S-Dihexylisothiocyanophosphat und O,O-Dihexylisothiocyanophosphat.

4. Zubereitungen nach Anspruch 1, dadurch gekennzeichnet, daß jede der beiden verbleibenden Wertigkeiten der Gruppe $-\underset{|}{N}-H$ abgesättigt ist durch :

— Wasserstoff,
— eine $C_1$-$C_{24}$ Alkylgruppe, gegebenenfalls substituiert mit einer OH-Gruppe oder einer Triäthoxysilylgruppe,
— eine $C_2$-$C_{12}$ Alkylengruppe,
— die Gruppe 7-Aza-4,10-dioxatridecylen N-substituiert mit einer 3′-Oxahexylengruppe,
— eine $C_3$-$C_{24}$ Alkenylgruppe,
— eine $C_3$-$C_{16}$ Alkinylgruppe,
— eine $C_5$-$C_{12}$ Cycloalkylgruppe,
— eine $C_9$-$C_{18}$ Polycycloalkylgruppe,
— eine Phenylgruppe, gegebenenfalls substituiert mit einer OH—, Trifluormethyl-, Mercaptotrifluormethyl- oder Anilingruppe,
— eine stickstoffhaltige heterocyclische Gruppe gegebenenfalls kondensiert mit einem Benzolring,
— eine heterocyclische Gruppe enthaltend Stickstoff und Schwefel als Heteroelementen und kondensiert mit einem Benzolring,
— eine heterocyclische Gruppe enthaltend Stickstoff und Schwefel als Heteroelemente und substituiert mit einer Mercaptogruppe,
— eine organische Gruppe, die mit besagtem Stickstoffatom,
— einen Heterozyklus bildet, der gegebenenfalls Sauerstoff als weiteres Heteroelement enthält.

5. Zubereitungen nach Anspruch 4, dadurch gekennzeichnet, daß die an die Gruppe $-\underset{|}{N}-H$ gebundene Alkylgruppe 1 bis 18 Kohlenstoffatome enthält, die an die Gruppe $-\underset{|}{N}-H$ gebundene Alkenylgruppe 3 bis 18 Kohlenstoffatome enthält, die an die Gruppe $-\underset{|}{N}-H$ gebundene Alkynylgruppe 3 bis 8 Kohlenstoffatome enthält und die an die Gruppe $-\underset{|}{N}-H$ gebundene Cycloalkylgruppe 5 bis 9 Kohlenstoffatome enthält.

6. Zubereitungen nach einem der Ansprüche 1, 4 oder 5, dadurch gekennzeichnet, daß die stickstoffhaltige Verbindung ausgewählt wird unter :

— Ammoniak,
— $C_3$-$C_{12}$ Alkylmonoamine,
— $C_3$-$C_{12}$ Hydroxymonoamine,
— $C_2$-$C_{12}$ Alkylendiamine,
— Polyalkylenpolyamine,
— Tris(3-oxa-6-aminohexyl)amin,
— Alkenylbernsteinsäureimide abgeleitet von den Polyaminen, deren Alkenylgruppe mehr als

30 Kohlenstoffatome enthält, Alkenylamine, deren Alkenylgruppe mehr als 20 Kohlenstoffatome enthält,

— γ-Aminopropyltriäthoxysilan,
— Cyclohexylamin,
— Anilin,
— o-Aminophenol,
— m-Trifluormethylanilin,
— Mercaptotrifluormethylanilin,
— N(2-Butylpentyl)N' (phenylendiamin),
— 3-Amino-1,2,3-triazol,
— 2-Aminobenzothiazol,
— 2-Aminobenzimidazol,
— 5-Amino-2-mercapto-1,3,4-thiadiazol,
— Morpholin.

7. Zubereitungen nach Anspruch 1, dadurch gekennzeichnet, daß die Umsetzung zwischen der Verbindung der Formel I und der stickstoffhaltigen Verbindung ausgeführt wird bei einer Temperatur zwischen 20 und 100 °C während 0,5 bis 10 Stunden, bei einem Verhältnis von Anzahl der Isocyanat- oder Isothiocyanatgruppen zu Anzahl der aktiven NH-Gruppen von 0,25 bis 1,25.

8. Zubereitungen nach Anspruch 7, dadurch gekennzeichnet, daß die Umsetzung zwischen der Verbindung der Formel I und der stickstoffhaltigen Verbindung bei einer Temperatur von 20 bis 70 °C während 0,75 bis 8 Stunden ausgeführt wird.